# EUROPEAN PATENT SPECIFICATION

(11) **EP 1 121 999 B1**
(45) Date of publication and mention of the grant of the patent: **12.05.2004**
(21) Application number: 01101583.1
(22) Date of filing: 25.01.2001
(51) Int. Cl.: B21F 11/00, B21F 27/20, B21F 33/00, B23D 17/06, B23D 23/00

(54) **Hydraulic shearing machine for a simultaneous cutting of arc welded trestles which consist of steel wires for reinforced concrete**
Hydraulische Maschine zum gleichzeitigen Schneiden von aus Stahldraht hergestellten Bewehrungskorben
Machine hydraulique de coupe simultanée de cages d'armature en fil d'acier

(30) Priority: 31.01.2000 IT VR200006
(43) Date of publication of application: 08.08.2001
(73) Proprietor: EDILVIBRO di Fontana Umberto & C.s.n.c., 36040 Orgiano (Vicenza) (IT)
(72) Inventor: Fontana, Gianmarco, 36040 Orgiano (Vicenza) (IT)
(74) Representative: Savi, Alberto

(56) References cited:
- DE-C- 19 940 613
- DE-U- 29 517 297
- US-A- 5 438 772

## Description

The present industrial invention proposes a hydraulic automatic shearing machine which cuts particular steel structures, the so-called arc welded trestles, which are suited to the construction of floors or realization of particular building manufactured articles.

Essentially, the present invention refers to a system of levers which are actuated by a hydraulic cylinder which is controlled by a specific power pack. The levers are provided with particular cutting elements or knives which enable a simultaneous cutting of one or more arc welded trestles.

In comparison with the known solutions, the present invention does improve operative phases such as the cutting of arc welded trestles or the like. Up to now, the cutting phases have been accomplished manually while the present invention makes the cutting completely automatic and several practical and economical advantages derive from this fact.

As is known, the building field utilize several building techniques by means of which it is possible for instance to build floors in reinforced concrete or other similar works which involve a jet of concrete in which suited metallic trestles are bedded, such trestles being the frame of the work.

Basically, the aforesaid trestles consist of three sections which run parallelly, are equidistant and form an essentially triangular arrangement. The three sections are connected by continuous transverses which are then angled and fixed by arc-welding.

The main problem the manufacturers of reinforced-concrete floors have to tackle is the execution of works by utilizing trestles that must suit to different plans.

Accordingly, the necessities deriving from production job orders compel the manufacturers to get in supplies of arc welded trestles of a standard measure (usually 12 metres). Then, the manufacturers must cut trestles in a measure that is suited to the plan/article to be carried out.

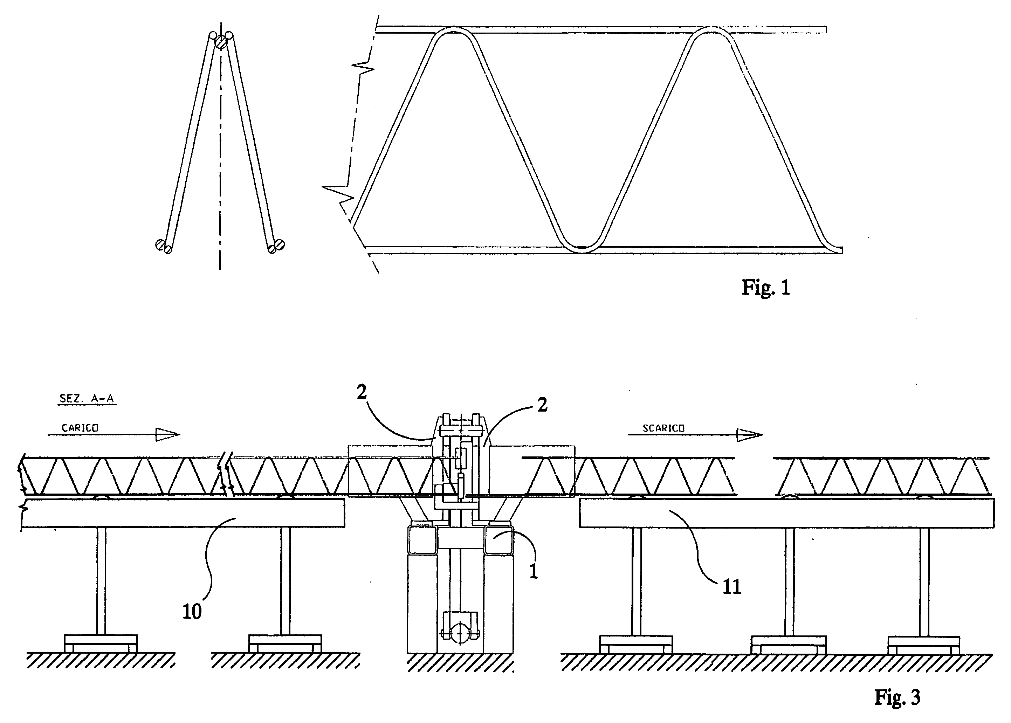

The measure cut of the trestles is effected by using shears or "bolt shears" which can be either mechanical or pneumatic or hydraulic. However, this system is very expensive and slow because it is necessary to effect three cuts on each single trestle, a cut being effected on the upper section, another cut being effected on the lower right section and a further cut being effected on the lower left section as it can be seen in Fig. 1.

In addition, the conventional marketed devices do not permit to cut sections the diameters of which could exceed a certain limit and therefore, the user is compelled to utilize other cutting systems such as the plasma cutting or the like, which increases the time required for this operation.

Besides the usual cutting system with manual bolt shears, alternative systems have been used in some cases such as a system with rotary discs permitting a rapid cutting. However, these systems have not reached satisfactory results considering the high, expensive wear and tear of the cutting disc, the noisiness, the dangerousness and the poor productiveness.

The prior art includes a German Utility Model No. DE 295 17 297 U1 which discloses a trestle cutting device which cuts the trestle in more phases. An inner knife and side knives are provided. At first, the inner knife cuts the lower ribs and then, the side knives cut the upper ribs. However, this trestle cutting device is completely different from the present invention since it does not permit to cut more trestles simultaneously. In addition, the German utility model in question requires a longer working time.

On the contrary, the present invention proposes to solve all the limits found with the solutions proposed by the known art, in particular the limits of the disc or manual systems. By utilizing the present invention it is possible to obtain a very high productivity (even 5 trestles simultaneously at most for a total of 15 manual cuts). In this way, the operating costs are minimized and the knives last a long time because they are subjected only to a compression stress and not to a friction stress as in the case of the known discs.

Another advantage according to the present invention consists in the fact that the cutting device in question acts in combination with loading and unloading belts which permit a complete automation of the trestle cutting system, which automation has not been considered till today.

In addition, this particular shearing system permits to utilize and treat trestles of different size without adjusting the machine.

The solution according to the present invention permits a simultaneous loading of more trestles after the same have been accumulated on upon the other so that it is possible to accomplish a complete cutting of more trestles in the same cycle.

The so-described operation is made possible by means of a particular combination of a plurality of mechanical elements, i.e. levers - hydraulic cylinder-knives, contained in a bearing structure sized in a suitable way.

All the so-described aims and advantages are reached according to the present invention with a hydraulic shearing machine for profile cutting of arc welded steel trestles for reinforced concrete, characterized by the fact that it consists of two lever jaws which are hinged to a frame on the upper part and are actuated by a divaricating hydraulic cylinder on the lower part and that the said lever jaws are provided near a central cutting sector with upper and lower cutting knives on the inner side, the hydraulic shearing machine further comprising a central socket (9) provided with beat knives on which said cutting knives act.

By using a loading conveyor belt and an unloading conveyor belt it is possible to feed in or take out the pieces from the aforesaid shearing machine. The shearing machine works by means of hydraulic power pack controlled by an electric board.

Further characteristics and details of the invention will be better understood from the following description, given as a non-exclusive example, with reference to the accompanying drawings wherein:
- Fig. 1 is a schematic view of a trestle as it is normally utilized in the building constructions, which trestle is cut in sections of different length by the shearing machine according to the present invention;
- Fig. 2 is a schematic view of a constructive example of the cutting plant of which the shearing machine according to the present invention is a component, which shearing machine is represented laterally;
- Fig. 3 represents schematically a working line for cutting trestles by using a shearing machine according to the invention, seen along lineA-A of Fig. 2;
- Fig. 4 and 5 are schematic side views of the shearing machine according to the invention during the treatment of superimposed trestles showing three and five outlines, respectively.

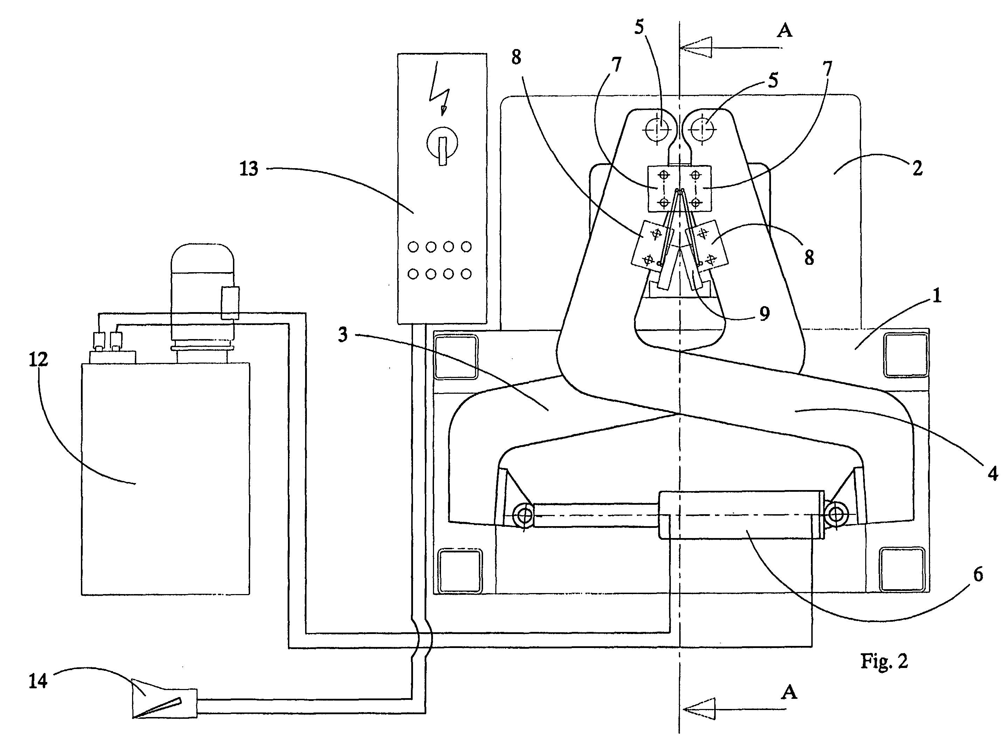

With reference to the accompanying drawings, and with particular reference to Fig. 2, the shearing machine consists basically of more components, i.e. a supporting frame 1 on which two parallel broadsides 2 are arranged that face one another in respect to a pair of lever jaws 3,4 which are particularly shaped.

More precisely, the lever jaws 3 and 4 are hinged in points 5 on the upper part while they are interested by the action of an oil-pressure actuator or cylinder 6 on the lower part. The actuator 6 causes the divarication or the jointing of the lower arms of the shearing machine with the opening and closing of its central cutting sector.

Near the central cutting sector and more precisely, in the inside of both lever jaws there are mounted and fixed pairs of knives that face reciprocally, i.e. upper knives 7 and lower knives 8, which act by beating on a central socket 9 which in turn is provided with beat knives which are arranged according to a substantially prismatic form with triangular section.

The so-described shearing machine is placed between a loading conveyor belt 10 and an unloading belt 11 which unloads the sheared pieces.

In addition, the cutting plant including the so-described shearing machine is provided with a hydraulic power pack 12 which is controlled by an electric panel 13 and the pulses controlling the cutting action are imparted by a controlling pedal 14.

We shall describe briefly an example of use of the cutting plant according to the present invention.

By means of the loading belt 10 it is possible to insert, both manually and automatically, the arc welded trestle in the inside of the shearing machine 1 so as to line up the wished cutting point with the cutting edge of the beating knives. The beating knives with the lower and upper knives 7 and 8 form the cutting line.

Once the trestle has been inserted in the described way, the controlling pedal 14 is pushed and the hydraulic power pack 12 is actuated and operates the cylinder 6 which in turn closes the levers 3 and 4. The levers are blocked rigidly with the knives and therefore, they cut the trestle in all its sections.

At this stage, the cut piece is placed on the unloading belt 11 and therefore, the piece can be unloaded both manually and automatically depending on the belt type.

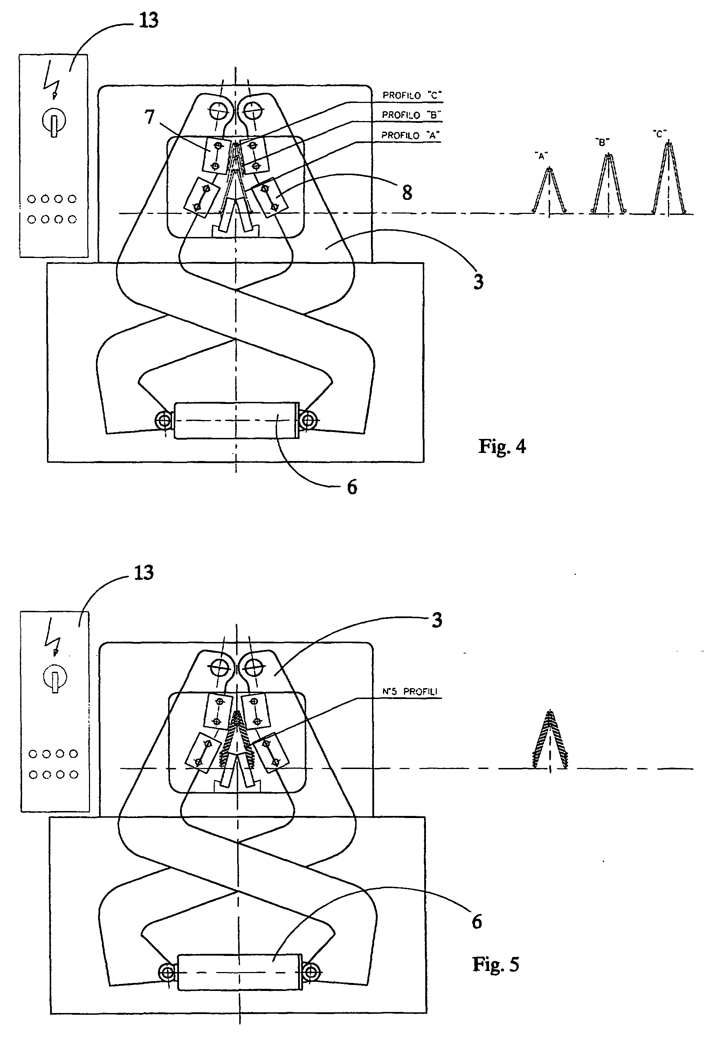

As it can be seen in Figures 4 and 5, the described shearing machine is able to effect simultaneous cuttings in all the sections of the trestle(s) in question with the knife system. From Figure 4 it appears that there are three trestles inserted while from Figure 5 it appears that there are even five trestles inserted.

In addition, there is the possibility that the said conveyor belts 10 and 11 permit a multiple load of arc welded trestles to be cut, there being the possibility of loading trestles of different size without adjusting the machine.

Finally, it is possible for the shears to be loaded manually, semi-automatically and automatically, with or without a control of the cutting lines.

In the so-described shearing machine it is also possible to provide some changes and variants in respect to the above description which has been given as a non-limiting example. In this way, it is possible to obtain solutions which are to be considered as included in the scope of protection of the present invention as defined by the following claims.

Likely, the measures, the geometric forms of the components and the materials of which each element of the invention is made can be changed depending on the need but the scope of the invention as defined by the appended claims remains the same.

## Claims

1. Hydraulic shearing machine for profile cutting of arc welded steel trestles for reinforced concrete, **characterized by** the fact that it consists of two lever jaws (3, 4) which are hinged to a frame (1) on the upper part and are actuated by a divaricating hydraulic cylinder (6) on the lower part and that the said lever jaws (3, 4) are provided near a central cutting sector with upper and lower cutting knives (7, 8) on the inner side, the hydraulic shearing machine further comprising a central socket (9) provided with beat knives on which said cutting knives (7, 8) act.

2. Hydraulic shearing machine for profile cutting as claimed in the foregoing claim, **characterized by** the fact that it uses a loading belt (10) and an unloading belt (11) for loading or unloading the pieces in or from the said shearing machine, which machine operates by means of a hydraulic power pack (12) controlled by an electric board (13).

3. Hydraulic shearing machine for profile cutting as claimed in the foregoing claims, **characterized by** the fact that the frame (1) is a supporting frame (1) on which two parallel broadsides (2) are arranged which face one another in respect to a said pair of lever jaws (3, 4), particularly shaped.

4. Hydraulic shearing machine for profile cutting as claimed in claim 3, **characterized by** the fact that near said central cutting sector, and more precisely in the inside of both said lever jaws, said knives which act by beating on said central socket (9) are mounted and fixed in pairs which face one another, i.e. upper knives (7) and lower knives (8), and that said beat knives which are provided on said central socket (9) are arranged according to a substantially prismatic form with triangular section.

## Patentansprüche

1. Hydraulische Schermaschine zum Profilschneiden lichtbogengeschweißter Stahlgeflechte bzw. Stahlgestelle für verstärkten Beton, **dadurch gekennzeichnet, dass** sie aus zwei Hebelbacken (3, 4) besteht, die an einem Rahmen (1) am oberen Teil angelenkt sind und mittels eines doppelwirkenden Hydraulikzylinders (6) am unteren Teil betätigt werden, und dass die Hebelbacken (3, 4) in der Nähe eines mittigen Schneidabschnitts mit oberen und unteren Schneidmessern (7, 8) an der Innenseite vorgesehen sind, wobei die hydraulische Schermaschine außerdem eine mittige Buchse (9) aufweist, die mit Schlagmessern versehen ist, auf welche die Schneidmesser (7, 8) einwirken.

2. Hydraulische Schermaschine zum Profilschneiden gemäss dem vorgenannten Anspruch, **dadurch gekennzeichnet, dass** sie einen Beladungsriemen (10) und einen Entladungsriemen (11) zum Einladen der Teile in die Schermaschine oder Entladen der Teile aus der Schermaschine verwendet, wobei die Maschine mittels einer hydraulischen Antriebseinheit (12) arbeitet, die durch eine elektrische Steuerungstafel (13) gesteuert wird.

3. Hydraulische Schermaschine zum Profilschneiden gemäss der vorgenannten Ansprüche, **dadurch gekennzeichnet, dass** der Rahmen (1) ein Stützrahmen (1) ist, auf dem zwei parallele Breitseiten (2) angeordnet sind, die einander bezüglich des Paares speziell geformter Hebelbacken (3, 4) gegenüber liegen.

4. Hydraulische Schermaschine zum Profilschneiden gemäss Anspruch 3, **dadurch gekennzeichnet, dass** in der Nähe des mittigen Schneidabschnitts und insbesondere an der Innenseite der beiden Hebelbacken die Messer, die durch Schlagen auf die mittige Buchse (9) wirken, paarweise und einander gegenüberliegend, das heißt in Form oberer Messer (7) und unterer Messer (8), montiert und befestigt sind, und dass die Schlagmesser, die an der mittigen Buches (9) vorgesehen sind, in einer im wesentlichen prismatischen Form mit dreieckigem Querschnitt angeordnet sind.

## Revendications

1. Machine hydraulique de coupe pour un profilage à la fraise de tréteaux en acier soudé électriquement, **caractérisée par le fait qu'**elle consiste en deux mâchoires à levier (3, 4) qui sont articulées sur une armature (1) sur la partie supérieure et sont actionnées par un cylindre hydraulique de séparation (6) sur la partie inférieure et en ce que lesdites mâchoires à levier (3, 4) sont fournies près d'un secteur de coupe central avec des couteaux fraiseurs supérieur et inférieur (7, 8) sur le côté intérieur, machine hydraulique de coupe comprenant en outre une douille centrale (9) munie de couteaux batteurs sur lesquels lesdits couteaux fraiseurs (7, 8) agissent.

2. Machine hydraulique de coupe pour un profilage à la fraise selon la revendication précédente, **caractérisée par le fait qu'**elle utilise un ruban d'alimentation (10) et un ruban d'évacuation (11) pour alimenter ou évacuer les pièces dans ou à partir de ladite machine de coupe, laquelle machine fonctionne au moyen d'un bloc d'alimentation hydraulique (12) commandé par un tableau électrique (13).

3. Machine hydraulique de coupe pour un profilage à la fraise selon la revendication précédente, **caractérisée par le fait que** l'armature (1) est une armature de support (1) sur laquelle deux côtés plats parallèles (2) sont agencés qui se font face par rapport à ce que l'on appelle une paire de mâchoires à levier (3, 4), particulièrement formées.

4. Machine hydraulique de coupe pour un profilage à la fraise selon la revendication 3, **caractérisée par le fait que** près dudit secteur de coupe central, et plus précisément à l'intérieur desdites mâchoires à levier, lesdits couteaux qui agissent par martelage sur ladite douille centrale (9) sont montés et fixés en paires qui se font face, c'est-à-dire les couteaux supérieurs (7) et les couteaux inférieurs (8), et en ce que lesdits couteaux batteurs qui sont fournis sur ladite douille centrale (9) sont agencés selon une forme sensiblement prismatique avec une section triangulaire.
